# EUROPÄISCHE PATENTSCHRIFT

(11) **EP 1 171 680 B1**
(45) Veröffentlichungstag und Bekanntmachung des Hinweises auf die Patenterteilung: **06.04.2005**
(21) Anmeldenummer: 00988623.5
(22) Anmeldetag: 17.11.2000
(51) Int. Cl.: E05F 15/16, H02K 7/116

(54) **MOTORGEHÄUSE UND POLTOPF, INSBESONDERE FÜR FENSTERHEBER- ODER SCHIEBEDACHMOTOREN**
MOTOR HOUSING AND POLE-WELL, IN PARTICULAR FOR ELECTRIC WINDOW OR SUNROOF MOTORS
CARTER DE MOTEUR ET ELEMENT POLAIRE CUPULIFORME, NOTAMMENT POUR MOTEURS DE LEVE-VITRES ET DE TOITS OUVRANTS

(30) Priorität: 19.02.2000 DE 10019512
(43) Veröffentlichungstag der Anmeldung: 16.01.2002
(73) Patentinhaber: ROBERT BOSCH GMBH, 70442 Stuttgart (DE)
(72) Erfinder: HAGER, Martin, D-77830 Bühlertal (DE); HUCK, Thomas, 77836 Rheinmuenster (DE)
(86) Internationale Anmeldenummer: PCT/DE2000/004040
(87) Internationale Veröffentlichungsnummer: WO 2001/061133

(56) Entgegenhaltungen:
- DE-U- 29 702 525

## Beschreibung

### Stand der Technik

Die Erfindung betrifft ein Motorgehäuse und einen Poltopf für einen elektromotorischen Antrieb, insbesondere für Fensterheber- oder Schiebedachmotoren in einem Kraftfahrzeug, nach der Gattung der unabhängigen Ansprüche.

Solche Gehäuse für Fensterhebermotoren oder andere Stellantriebe sind allgemein bekannt, DE-GM 297 02 525.2. Die dort dargestellten Gehäuse weisen im Wesentlichen zwei Teile auf, ein Poltopf aus Metall und ein Getriebegehäuse, das auch aus Metall oder Kunststoff besteht. Bei diesen Motoren befindet sich zwischen Poltopf und Getriebegehäuse meist ein Bürstenhalter aus Kunststoff, der auch als Dichtung dient. An diesem Bürstenhalter ragt aus dem Motor heraus ein integrierter Stecker mit einer Kabeldurchführung für die Stromversorgung des Motors. Die beiden Gehäuseteile sind derart miteinander verbunden, daß der Steckerabgang zwischen zwei Schraubverbindungen ungestört herausragt. Das Gehäuse ist so konstruiert, daß der Bürstenhalter mit dem Steckerabgang um 180° gedreht und die Motorstromversorgung von rechts oder links zugeführt werden kann. Eine Leiterplatte findet hier aber keinen Platz im Gehäuse.

Bei einer anderen Ausführung des Motors mit integrierter Elektronik EP 0 474 904 B1 und integriertem Elektronikgehäuse befindet sich der Bürstenhalter auf einer Leiterplatte, die parallel zur Motorwelle angeordnet ist. Die Leiterplatte ist parallel zur Motorwelle, seitlich an dieser vorbei zu einem Elektronikstecker herausgeführt. Dabei kann es aber zu einer Kollision der Leiterplatte mit einer der Schraubverbindungen zwischen Poltopf und Getriebegehäuse kommen. Dieses Problem wird hier umgangen, indem die Leiterplatte am Ort der Gehäuseverschraubung sehr schmal, als Hals ausgeführt und an der Verschraubung von Poltopf und Getriebegehäuse vorbei geführt wird. Diese Form der Leiterplatte ist aber recht aufwendig in der Fertigung und stellt eine starke Einschränkung für die Bestückung der Leiterplatte mit großflächigeren Bauelementen dar. Ein weiterer Nachteil dieser Lösung ist, daß für verschiedene Gehäusetypen immer auch verschiedene Poltöpfe mit verschiedenen Anordnungen der Aufnahmen gefertigt werden müssen, was ungünstig für die Fertigung und insgesamt sehr kostenintensiv ist. Bei der Wahl eines Poltopfes mit drei Aufnahmen wäre das Vertauschen des Steckers beim Motor ohne Elektronik nicht mehr möglich. Dies wird aber als deutlicher Nachteil empfunden. Außerdem ist es notwendig, für verschiedene Motorausführungen, wenn beispielsweise aus späteren Platzgründen die Leiterplatte auf der anderen Seite des Motors herausgeführt werden muß, komplett neue Gehäuseeinzelteile zu konstruieren, bei denen gerade die Verschraubungspunkte zwischen Poltopf und Getriebegehäuse so gelegt sind, daß die Leiterplatte auf dieser Seite herausführbar ist.

### Vorteile der Erfindung

Die erfindungsgemäße Vorrichtung mit den Merkmalen des Hauptanspruchs hat den Vorteil, daß ein universeller Poltopf geschaffen ist, der mit verschiedenen Getriebe- und Elektronikgehäuse zu verschiedene Motorgehäuse zusammengefügt werden kann. Eine dadurch mögliche modulare Produktionstechnik hat enorme Vorteile. Das teuerste Gehäuseteil, der Poltopf, kann in sehr hoher Stückzahl produziert werden, die zugehörigen billigeren Gehäuseteile für Getriebe, Elektronik und Stecker können je nach Anforderung des Motorgehäuses günstig variiert werden, ohne die Funktionalität der verschiedenen Motorgehäusetypen einzuschränken. Außerdem läßt sich die gewohnte hohe Verbindungsfestigkeit auch bei unterschiedlichen Konstellationen erreichen, da - wie üblich- vier Verbindungspunkte verwendet werden können.

Durch die in den Unteransprüchen ausgeführten Merkmale sind vorteilhafte Weiterbildungen der Vorrichtung nach dem Hauptanspruch möglich. Weist der Poltopf mindestens eine Aufnahme mehr auf, als das den Poltopf abschließende Gehäuse und ist eine Aufnahme und/oder Gegenaufnahme nicht besetzt, erhält man eine großes Maß an Flexibilität, die Poltöpfe mit verschiedenen Gehäusteilen zu kombinieren. Durch das nichtbesetzten von Aufnahmen und /oder Gegenaufnahmen kann man diesen ausgesparten Raum gezielt für unterschiedliche Spezifikationen der unterschiedlichen Gehäuse nutzen.

Die Anordnung der Aufnahmen in den Eckpunkten eines Rechtecks hat den Vorteil, der Kompatibilität mit jetzigen gängigen Getriebegehäusen. Diese Poltöpfe können auch für Stellmotoren ohne Elektronik eingesetzt werden. Liegt eine fünfte Aufnahme auf einer kurzen Seite des Rechtecks, wird die Gesamtbreite des Motorgehäuses dadurch nicht vergrößert, was für dessen Einbau in Kraftfahrzeugdächern und -türen wichtig ist. Außerdem kann diese fünfte Aufnahme dann die Kräfte von zwei naheliegenden wahlweise unbesetzten Aufnahmen besser aufnehmen.

Bei einem Poltopf mit fünf Aufnahmen für einen Motor ohne Elektronik kann der Steckerhals wahlweise links und rechts angeordnet werden. Dies wird ermöglicht durch die Bestückung der vier Aufnahmen in den Ecken des Rechtecks, die punktsymmetrisch zur Motorwelle angeordnet sind. Das bedeutet einen großen Gewinn an Flexibilität für den Einbau und die Verkabelung der Motoren. Durch Verwendung einer sechsten Aufnahme wird die Verbindungsfestigkeit des Motorgehäuses noch gesteigert, ohne das Motorgehäuse zu verbreitern. Bei dieser Lösung wird die Form und Länge des Steckerhalses der Lage der sechsten Aufnahme angepaßt.

Ist das den Poltopf abschließende Gehäuse ein Getriebegehäuse und ist dazwischen ein Bürstenhalter mit Anschlußstecker befestigt, kann das Motorgehäuse völlig identisch zu bisher üblichen Motoren eingesetzt werden. Vorteilhaft ist die Positionierung der fünften Aufnahme gegenüber des Steckers, weil dadurch keine baulichen Änderungen für den Steckerhals notwendig sind.

Zusätzlich kann derselbe Poltopf auch für Motoren mit Elektronik eingesetzt werden, ohne eine optimale Anordnung der Leiterplatte zu behindern. Durch das Nichtbesetzen einer Aufnahme in der Ecke des Rechtecks, kann die Leiterplatte im Motor mit Elektronik parallel zur abgeflachten Getriebegehäusewand parallel zur langen Seite des Rechtecks verlaufen, ohne durch eines der Verbindungselemente, die sonst in allen vier Ecken des rechteckförmigen Poltopfflansches angebracht sind, behindert zu werden. Ein Vorteil dieser Einbauweise der Leiterplatte ist die Möglichkeit größere elektronische Bauteile, z.B. Relais, auf der Leiterplatte unterzubringen, ohne von der Gehäusewand eingeschränkt zu sein. Außerdem vereinfacht sich die Montage der Leiterplatte durch deren parallel Ausrichtung zur Gehäusewand.

Durch die Verschraubung weiterer optionaler, unsymmetrisch angeordneten Aufnahmen läßt sich die Festigkeit gegenüber einer Verschraubung mit drei Verschraubungspunkten erhöhen. Dabei ist von Vorteil, daß sich die bauliche Breite des Motors, die der kurzen Seite des genannten Rechtecks entspricht, dadurch nicht vergrößert. Die Lage der fünften Aufnahme neben der unbesetzten Aufnahme gewährleistet, daß sich die Verbindungsfestigkeit durch die unbesetzte Aufnahme nicht verschlechtert.

Die Kompatibilität des Poltopfes zu den den Poltopf abschließenden Gehäusen für nur einen Stecker aufweisende Motoren, für Motoren mit vorgesehenem Elektonikeinschubmodul und Motoren mit integrierter Elektronik machen die Produktion unabhängig von einem eventuell schnellen Wandel des Marktes in Richtung integrierte Elektronik. Dem derzeit noch bestehenden Bedarf an rein mechanischen Motoren wird dadurch Rechnung getragen, daß die für dieses Produkt wichtige Option, die wahlweise Anordnung des Steckers für die Stromzufuhr links oder rechts, gewährleistet ist.

Eine solche Lösung für das Motorgehäuse mit nur einem Typ von Poltopf mit fünf oder sechs Aufnahmen für alle Motortypen ist natürlich sehr kosten- und produktionsgünstig.

### Zeichnung

In der Zeichnung sind Ausführungsbeispiele einer erfindungsgemäßen Vorrichtung dargestellt und in der nachfolgenden Beschreibung näher erläutert.

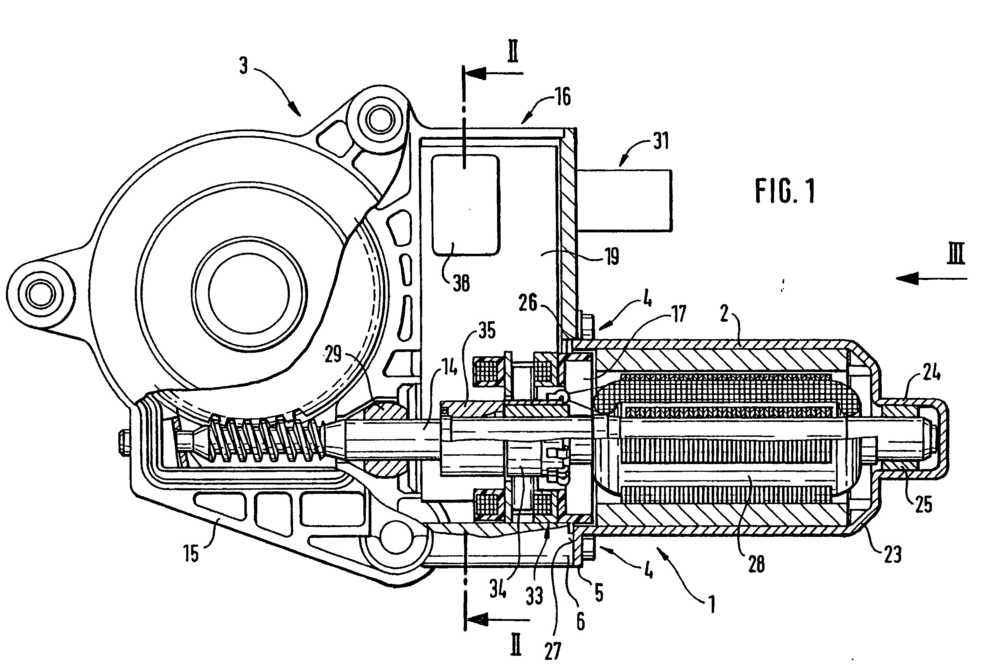

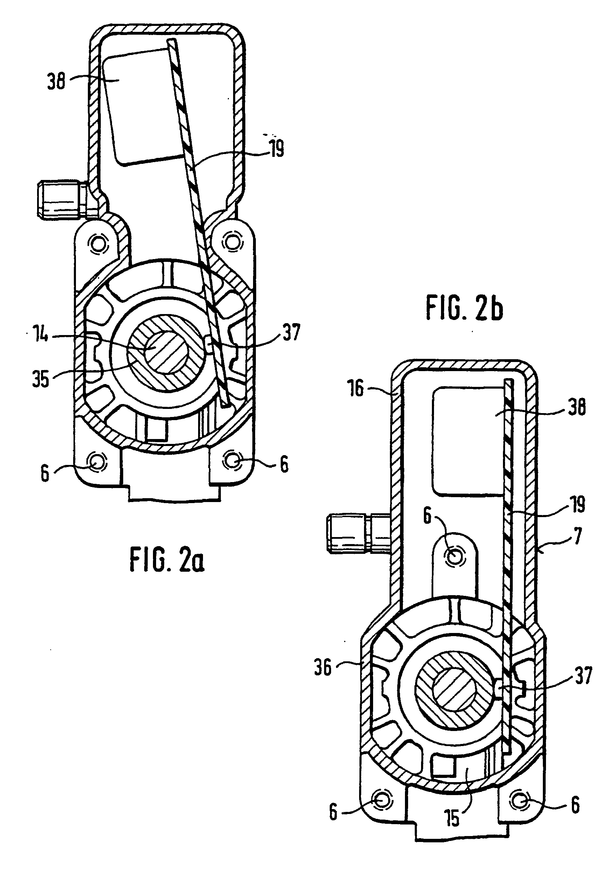

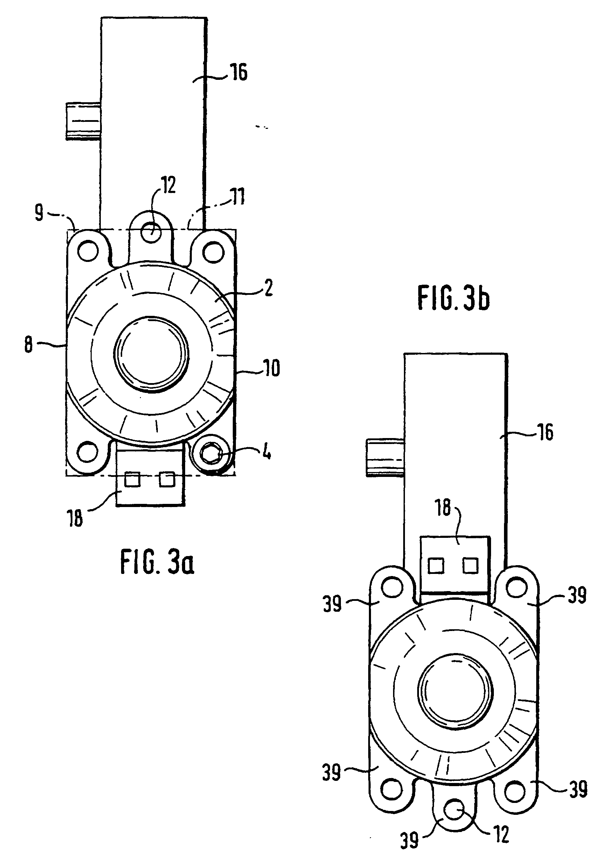

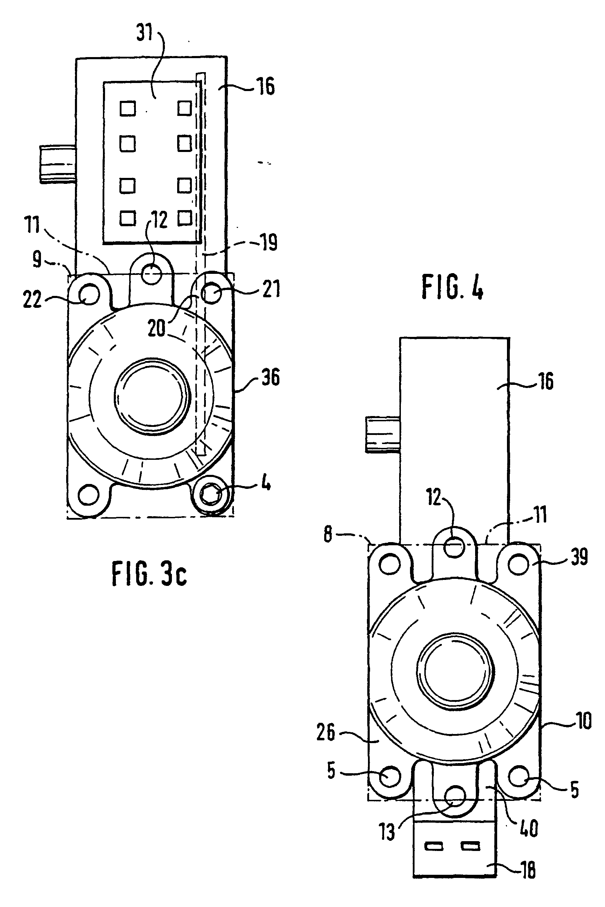

Es zeigen Figur 1 ein Ausführungsbeispiel eines Motorgehäuses im Schnitt, die Figuren 2a und 2b jeweils eine Ansicht bekannter Ausführungsvarianten entsprechend einem Schnitt entlang der Linie II-II in Figur 1, die Figuren 3a bis 3c jeweils eine schematische Darstellung verschiedene Ausführungen in Richtung des Pfeiles III in Figur I und Figur 4 ein weiteres Ausführungsbeispiel gemäß Figur 3.

### Beschreibung der Ausführungsbeispiele

Das in der Figur 1 dargestellte Ausführungsbeispiel zeigt ein erfindungsgemäßes Motorgehäuse 1 mit integrierter Elektronik, insbesondere für Stellantriebe in einem Kraftfahrzeug, wobei sich das Ausführungsbeispiel speziell auf einen Fensterhebermotor bezieht. Das Motorgehäuse 1 umfaßt ein Poltopf 2 und ein den Poltopf 2 abschließendes Gehäuse 3, hier als ein Getriebegehäuse 15 mit einem integrierten Elektronikgehäuse 16 ausgebildet. Der Poltopf 2 besteht aus einem tiefgezogenen, abgeflachten zylindrischen Rohr, an dessen Boden eine Halterung 24 für ein Poltopflager 25 ausgeformt ist. Am anderen Ende des Poltopfes 2 ist ein Flansch 26 ausgeformt, in dem als Aufnahmen 5 Löcher für Verbindungselemente 4, hier als Schrauben ausgeführt, ausgespart sind. Diese Aufnahmen 5 wirken mit auf einem Flansch des Getriebegehäuses 27 angeordneten Gegenaufnahmen 6, hier als Sackgewinde ausgeformt, mittels der Verbindungselemente 4 zusammen, deren Anordnung in Figur 3 näher erläutert wird.

Im Poltopf ist ein Anker 28 angeordnet, der von einer Motorwelle 14 durchdrungen ist, die in dem Poltopflager 25 und in einem Kalottenlager 29 gelagert ist.

Eine Leiterplatte 19 mit Elektronikbauteilen und integriertem Elektronikstecker 31 ist parallel zur Motorwelle 14 angeordnet und wird unter dieser vorbeigeführt. Bei dieser Anordnung einer rechteckigen Leiterplatte 19 erstreckt sich deren Breite über den Bereich eines Kollektors 34 und eines auf der Motorwelle 14 befestigten Ringmagneten 35. Dazu ist der Poltopf 2 so kurz, daß er den Kollektor 35 nicht umfaßt. Zwei Bürsten 33 mit Anschlüsse für die Stromversorgung werden von einem separaten Bauteil 17 gehalten, das zwischen dem Poltopf 2 und das den Poltopf abschließende Gehäuse 3 eingespannt ist. Dieses Bauteil 17 dient gleichzeitig als planar ausgeformte Dichtung zwischen den beiden Flanschen 26 und 27 des Poltopfes 2 und das den Poltopf 2 abschließende Gehäuses 3. Es ragt mit den Bürsten 33 über die Flansche 26 und 27 hinaus zum Kollektor 34 hin. Die im Bereich des Ringmagneten 35 breite rechteckige Leiterplatte 19 kann in unmittelbarer Nähe zum Ringmagneten 35 großflächigere Sensoren 37 oder andere elektronische Bauteile unterbringen.

In Figur 2a ist in einem Schnitt dargestellt, wie in einem herkömmlichen Motorgehäuse mit üblichen vier Aufnahmen 5 eine Leiterplatte 19 eingebracht werden kann. Die Leiterplatte 19 trägt eine Sensoreinrichtung 37 und muß deshalb im Bereich der Ankerwelle 14 in deren unmittelbaren Nähe angeordnete sein. Vom Bereich der Ankerwelle 14 aus erstreckt sich die Leiterplatte 19 in das Elektronikgehäuse 16 und muß hierfür an zu liegen, was den Platz für hier angeordnete größere Bauteile, wie Relais 38 einschränkt und die Montage der Leiterplatte 19 erschwert.

Um diesen Nachteil zu beheben wurde in einer anderen bekannten Lösung nach Figur 2b die Anzahl der Aufnahmen 5 reduziert, wodurch die Leiterplatte 19 parallel entlang einer Längsseite 7 des Elektronikgehäuses 16 geführt werden kann, ohne eine Aufnahme 5 zu queren. Durch die Reduzierung der Anzahl der Aufnahmen kann aber die Festigkeit und Sicherheit der Verbindung von Poltopf2 und Getriebegehäuse 15 unter einen tolerierbaren Wert fallen.

Die Figuren 3a bis 3c zeigen schematisch die verschiedenen Kombinationsmöglichkeiten eines Poltopfes 2 mit fünf Aufnahmen 5. Dabei sind vier der fünf Aufnahmen 5 in den Ecken 9 eines Rechtecks 8 angeordnet. Das Rechteck 8 hat lange Seiten 10 und kurze Seiten 11. Der Poltopf 2 und das Getriebegehäuse 15 besitzen abgeflachte Gehäusewände 36, die parallel zu den langen Seiten 10 des Rechtecks verlaufen. Auf einer der kurzen Seiten 11 des Rechtecks 8 ist eine fünfte Aufnahme 12 angeordnet. Die Aufnahmen 5 des Poltopfes 2 sind hier als Aussparungen im Poltopfflansch 26 derart ausgebildet, daß ausgehend von einer kreisförmigen Flanschfläche nach außen gebogene Blechlaschen 39 angeformt sind (Figur 3b). Die exakte Form und Ausmaße dieser Blechlaschen 39 können verschieden ausgestaltet sein.

Figur 3a zeigt nun die Anordnung des Poltopfes 2 auf einem Getriebegehäuse 15 ohne Elektronik. Die vier Aufnahmen 5 in den Ecken 9 des Rechtecks 8 sind mit Verbindungselementen 4 belegt, die fünfte Aufnahme 12 ist verbindungselementefrei. Ein zweipolige Stecker 18 für die Motorstromversorgung, der als Fortsatz des Bauteils 17 ausgebildet ist, ragt auf der linken Seite der Abbildung, gegenüber der fünften Aufnahme 12, zwischen zwei Verbindungselementen 4 heraus. Der Stecker 18 weist hier Buchsen für die korrespondierenden Steckfahnen des Anschlußkabels auf. Es könnten aber auch die Steckfahnen auf dem Bauteil 17 montiert sein.

Figur 3b zeigt eine zweite mögliche Position des Steckers 18 bei gleichem Pol- und Getriebegehäuse 2 und 15. Das Bauteil 17 mit dem Stecker 18 und dem Poltopf 2 sind gegenüber der Figur 3a um 180° gedreht, so daß der Stecker 18 nach rechts weist. Dies ist möglich, weil die vier Aufnahmen 5 in den Ecken 9 des Rechtecks 8 punktsymmetrisch zur Motorwelle 14 angeordnet sind.

Figur 3c zeigt denselben Poltopf 2 in Verbindung mit einem Getriebegehäuse 15 mit integriertem Elektronikgehäuse 16. Auf der rechten Seite sitzt auf dem Elektronikgehäuse 16 ein mehrpoliger Elektronikstecker 31, der mit der Leiterplatte 19 verbunden ist. Es sind nur drei Aufnahmen 5 besetzt. Die Leiterplatte 19 verläuft parallel entlang der abgeflachten Gehäusewand 36 und quert einen Bereich 20 einer unbesetzten Aufnahme 21. Dieser Bereich 20 ist derart definiert, daß für den Fall einer Belegung mit einem Verbindungselement 4 dessen Berührung mit der Leiterplatte 19 oder der darauf befindlichen Bauteile nicht sicher ausgeschlossen werden kann. Die fünfte Aufnahme 12, in diesem Fall mit einem Verbindungselement besetzt, liegt neben der unbesetzten Aufnahme 21, d.h. außerhalb des Bereichs 20. Die exakte Lage der fünften Aufnahme 12, ob also genau auf der kurzen Rechteckseite 11 oder exakt mittig auf dieser, ist dabei nicht von Bedeutung. Hier kann auch eine weitere Aufnahme 22 in der Ecke 9 des Rechtecks 8 gegenüber der Leiterplatte 19 belegt werden, um die Verbindungsfestigkeit des Motorgehäuses 1 zu erhöhen.

Figur 4 zeigt ein weiteres Ausführungsbeispiel in der schematischen Darstellung gemäß Figur 3. Der Flansch 26 des Poltopfes 2 besitzt hierbei eine sechste Aufnahme 13 gegenüber der fünften Aufnahme 12. Dies hat den Vorteil zusätzlicher Verbindungsfestigkeit des Motorgehäuses.

Zwischen Flansch 26 und Stecker 18 befindet sich ein Steckerhals 40 als Teil des Bauteils 17, das hierzu entsprechend verlängert ist. Auch dieses Ausführungsbeispiel, denkbar mit noch weiteren zusätzlichen Aufnahmen 5, ist universal für verschiedene den Poltopf abschließende Gehäuse 3 verwendbar.

## Patentansprüche

1. Motorgehäuse (1), insbesondere für Fensterheber- oder Schiebedachmotoren, mit mindestens einem Poltopf (2) und einem den Poltopf abschließenden Gehäuse (3), die mittels Verbindungselementen (4) miteinander verbunden sind, **dadurch gekennzeichnet, daß** der Poltopf (2) mehrere Aufnahmen (5) für die Verbindungselemente (4) aufweist, daß das den Poltopf abschließende Gehäuse (3) mehrere Gegenaufnahmen (6) für die Verbindungselemente (4) aufweist und daß für unterschiedliche, den Poltopf abschließende Gehäuse (3) unterschiedliche Aufnahmen (5) des Poltopfes (2) mittels Verbindungselementen (4) mit den Gegenaufnahmen (6) zusammenwirken.

2. Motorgehäuse (1) nach Anspruch 1, **dadurch gekennzeichnet, daß** der Poltopf (2) mindestens eine Aufnahme (5) mehr aufweist als das den Poltopf abschließende Gehäuse (3) Gegenaufnahmen (6) aufweist.

3. Motorgehäuse (1) nach einem der Ansprüche 1 oder 2, **dadurch gekennzeichnet, daß** bei zusammengebautem Poltopf (2) und den Poltopf abschließenden Gehäuse (3) mindestens eine Aufnahme (5) und/oder eine Gegenaufnahme (6) verbindungselememtefrei ist.

4. Motorgehäuse (1) nach einem der Ansprüche 1 bis 3, **dadurch gekennzeichnet, daß** der Poltopf (2) fünf Aufnahmen (5) aufweist von denen vier Aufnahmen (5) die Eckpunkte (9) eines Rechtecks (8) bilden.

5. Motorgehäuse (1) nach Anspruch 4, **dadurch gekennzeichnet, daß** das Rechteck (8) lange (10) und kurze (11) Seiten aufweist und daß die fünfte Aufnahme (12) im Bereich einer kurzen Rechteckseite (11) angeordnet ist.

6. Motorgehäuse (1) nach einem der Ansprüche 4 oder 5, **dadurch gekennzeichnet, daß** am Poltopf (2) eine sechste Aufnahme (13) der fünften (12) gegenüberliegend angeordnet ist.

7. Motorgehäuse (1) nach einem der Ansprüche 4 bis 6, **dadurch gekennzeichnet, daß** die vier Aufnahmen (5), die die Eckpunkte (9) des Rechtecks (8) bilden, punktsymmetrisch zu einer im Motorgehäuse (1) angeordneten Motorwelle (14) angeordnet sind.

8. Motorgehäuse (1) nach einem der Ansprüche 1 bis 7, **dadurch gekennzeichnet, daß** das den Poltopf (2) abschließende Gehäuse ein Getriebegehäuse (15) ist.

9. Motorgehäuse (1) nach einem der Ansprüche 1 bis 8, **dadurch gekennzeichnet, daß** das den Poltopf abschließende Gehäuse (3) eine Elektronik (16) aufnimmt.

10. Motorgehäuse (1) nach einem der vorangehenden Ansprüche, **dadurch gekennzeichnet, daß** zwischen dem Poltopf (2) und dem den Poltopf abschließenden Gehäuse (3) ein einen Stecker (18) aufweisendes Bauteil (17) eingebracht ist.

11. Motorgehäuse (1) nach Anspruch 4 und 10, **dadurch gekennzeichnet, daß** die fünfte Aufnahme (12) gegenüber dem Stecker (18) angeordnet ist.

12. Motorgehäuse (1) nach einem der Ansprüche 1 bis 11, **dadurch gekennzeichnet, daß** eine Leiterplatte (19) im den Poltopf abschließenden Gehäuse (3) angeordnet ist und die Leiterplatte (19) parallel entlang der langen Seite (10) des Rechtecks (8) geführt ist und dabei den Bereich (20) einer unbesetzten Aufnahme (21) quert.

13. Motorgehäuse (1) nach Anspruch 12, **dadurch gekennzeichnet, daß** die auf einer kurzen Seite (11) des Rechtecks (8) angeordnete fünfte Aufnahme (12) neben der unbesetzten Aufnahme (21) liegt und mit einer Gegenaufnahme (6) mittels eines Verbindungselements (4) verbunden ist.

14. Motorgehäuse (1) nach einem der Ansprüche 1 bis 13, **dadurch gekennzeichnet, daß** die Verbindungselemente (4) Schrauben, Nieten oder Preßstifte sind.

15. Poltopf (23) mit einem Flansch (26) an mindestens einem offenen Ende und angeformten Aufnahmen (5) an diesem Flansch (26), insbesondere für den Einsatz für Motorgehäuse nach einem der vorhergehenden Ansprüche, **gekennzeichnet durch** mindestens fünf Aufnahmen (5), von denen vier Aufnahmen (5) die Eckpunkte (9) eines Rechtecks (8) bilden.

16. Poltopf (23) nach Anspruch 15, **dadurch gekennzeichnet, daß** das Rechteck (8) lange und kurze Seiten (10,11) aufweist und daß die fünfte Aufnahme (12) im Bereich einer kurzen Rechteckseite (11) angeordnet ist.

17. Poltopf (23) nach einem der Ansprüche 15 oder 16, **dadurch gekennzeichnet, daß** am Poltopf (2) eine sechste Aufnahme (13) der fünften (12) gegenüberliegend angeordnet ist.

## Claims

1. Motor housing (1), in particular for window winder or sunroof motors, having at least one pole pot (2) and one housing (3) closing off the pole pot which are connected to one another by means of connecting elements (4), **characterized in that** the pole pot (2) has two or more receptacles (5) for the connecting elements (4), **in that** the housing (3) closing off the pole pot has two or more opposing receptacles (6) for the connecting elements (4), and **in that** different receptacles (5) of the pole pot (2) interact with the opposing receptacles (6) by means of connecting elements (4) for different housings (3) closing off the pole pot.

2. Motor housing (1) according to Claim 1, **characterized in that** the pole pot (2) has at least one receptacle (5) more than the housing (3) closing off the pole pot has opposing receptacles (6).

3. Motor housing (1) according to either of Claims 1 or 2, **characterized in that**, when the pole pot (2) and the housing (3) closing off the pole pot are assembled, at least one receptacle (5) and/or one opposing receptacle (6) is free of connecting elements.

4. Motor housing (1) according to one of Claims 1 to 3, **characterized in that** the pole pot (2) has five receptacles (5), of which four receptacles (5) form the corner points (9) of a rectangle (8).

5. Motor housing (1) according to Claim 4, **characterized in that** the rectangle (8) has long (10) and short (11) sides, and **in that** the fifth receptacle (12) is arranged in the region of a short rectangle side (11).

6. Motor housing (1) according to either of Claims 4 or 5, **characterized in that** a sixth receptacle (13) is arranged on the pole pot (2) opposite the fifth receptacle (12).

7. Motor housing (1) according to one of Claims 4 to 6, **characterized in that** the four receptacles (5), which form the corner points (9) of the rectangle (8), are arranged symmetrically about a point with respect to a motor shaft (14) arranged in the motor housing (1).

8. Motor housing (1) according to one of Claims 1 to 7, **characterized in that** the housing closing off the pole pot (2) is a gear mechanism housing (15).

9. Motor housing (1) according to one of Claims 1 to 8, **characterized in that** the housing (3) closing off the pole pot accommodates electronics (16).

10. Motor housing (1) according to one of the preceding claims, **characterized in that** a component (17) having a plug (18) is introduced between the pole pot (2) and the housing (3) closing off the pole pot.

11. Motor housing (1) according to Claims 4 and 10, **characterized in that** the fifth receptacle (12) is arranged opposite the plug (18).

12. Motor housing (1) according to one of Claims 1 to 11, **characterized in that** a printed circuit board (19) is arranged in the housing (3) closing off the pole pot, and the printed circuit board (19) is guided parallel along the long side (10) of the rectangle (8) and, in the process, crosses the region (20) of an unoccupied receptacle (21).

13. Motor housing (1) according to Claim 12, **characterized in that** the fifth receptacle (12) arranged on a short side (11) of the rectangle (8) lies adjacent to the unoccupied receptacle (21) and is connected to an opposing receptacle (6) by means of a connecting element (4).

14. Motor housing (1) according to one of Claims 1 to 13, **characterized in that** the connecting elements (4) are screws, rivets or press pins.

15. Pole pot (23) having a flange (26) at at least one open end and integrally formed receptacles (5) on this flange (26), in particular for use for a motor housing according to one of the preceding claims, **characterized by** at least five receptacles (5), of which four receptacles (5) form the corner points (9) of a rectangle (8).

16. Pole pot (23) according to Claim 15, **characterized in that** the rectangle (8) has long and short sides (10, 11), and **in that** the fifth receptacle (12) is arranged in the region of a short rectangle side (11).

17. Pole pot (23) according to either of Claims 15 or 16, **characterized in that** a sixth receptacle (13) is arranged on the pole pot (2) opposite the fifth receptacle (12).

## Revendications

1. Carter de moteur (1), en particulier pour moteurs de lève-vitre ou de toit ouvrant, comprenant un godet polaire (2) et un carter (3) qui ferme le godet polaire, assemblés entre eux au moyen d'éléments d'assemblage (4),
**caractérisé en ce que**
le godet polaire (2) présente plusieurs logements (5) pour les éléments d'assemblage (4), le carter (3) qui ferme le godet polaire présente plusieurs logements opposés (6) pour les éléments d'assemblage (4) et, pour différents carters (3) qui ferment le godet polaire, différents logements (5) du godet polaire coopèrent avec les logements opposés (6) au moyen d'éléments d'assemblage (4).

2. Carter de moteur (1) selon la revendication 1,
**caractérisé en ce que**
le godet polaire (2) présente au moins un logement (5) de plus que le carter (3) qui ferme le godet polaire ne présente de logements opposés (6).

3. Carter de moteur (1) selon une des revendications 1 ou 2,
**caractérisé en ce que**
lorsque le godet polaire (2) et le carter (3) qui ferme le godet polaire sont assemblés, au moins un logement (5) et/ou un logement opposé (6) est ou sont libres d'éléments d'assemblage.

4. Carter de moteur (1) selon une des revendications 1 à 3,
**caractérisé en ce que**
le godet polaire (2) présente cinq logements (5) dont quatre logements (5) forment les sommets (9) d'un rectangle (8).

5. Carter de moteur (1) selon la revendication 4,
**caractérisé en ce que**
le rectangle (8) présente des grands côtés (10) et des petits côtés (11), et le cinquième logement (12) est disposé dans la région d'un petit côté (11) du rectangle.

6. Carter de moteur (1) selon une des revendications 4 ou 5,
**caractérisé en ce que**
sur le godet polaire (2), est disposé un sixième logement (13) placé à l'opposé du cinquième (12).

7. Carter de moteur (1) selon une des revendications 4 à 6,
**caractérisé en ce que**
les quatre logements (5) qui forment les sommets (9) du rectangle (8) sont placés dans une disposition de symétrie par rapport à un point relativement à un arbre de moteur (14) monté dans le carter de moteur (1).

8. Carter de moteur (1) selon une des revendications 1 à 7,
**caractérisé en ce que**
le carter qui ferme le godet polaire (2) est un carter d'engrenage (15).

9. Carter de moteur (1) selon une des revendications 1 à 8,
**caractérisé en ce que**
le carter (3) qui ferme le godet polaire renferme une électronique (16).

10. Carter de moteur (1) selon une des revendications précédentes,
**caractérisé en ce qu'**
entre le godet polaire (2) et le carter (3) qui ferme le godet polaire, est logé un élément (17) qui présente une fiche (18).

11. Carter de moteur (1) selon les revendications 4 et 10,
**caractérisé en ce que**
le cinquième logement (12) est disposé à l'opposé de la fiche (18).

12. Carter de moteur (1) selon une des revendications 1 à 11,
**caractérisé en ce qu'**
un circuit imprimé (19) est disposé dans le carter (3) qui ferme le godet polaire et le circuit imprimé (19) est guidé parallèlement le long du grand côté (10) du rectangle (8) et traverse la région (20) d'un logement inoccupé (21).

13. Carter de moteur (1) selon la revendication 12,
**caractérisé en ce que**
le cinquième logement (12) disposé sur un petit côté (11) du rectangle (8) se trouve à côté du logement inoccupé (21) et est relié à un logement opposé (6) au moyen d'un élément d'assemblage (4).

14. Carter de moteur (1) selon une des revendications 1 à 13,
**caractérisé en ce que**
les éléments d'assemblage (4) sont des vis, des rivets ou des chevilles ajustées à serrage.

15. Godet polaire (23) muni d'une bride (26) à au moins une extrémité ouverte, et de logements (5) formés sur cette bride (26), en particulier pour l'utilisation pour des carters de moteurs selon une des revendications précédentes,
**caractérisé par**
au moins cinq logements (5) dont quatre logements (5) forment les sommets (9) d'un rectangle (8).

16. Godet polaire (23) selon la revendication 15,
**caractérisé en ce que**
le rectangle (8) présente des grands côtés et des petits côtés (10, 11), et le cinquième logement (12) est disposé dans la région d'un petit côté (11) du rectangle.

17. Godet polaire (23) selon une des revendications 15 ou 16,
**caractérisé en ce qu'**
un sixième logement (13) est prévu sur le godet polaire (2), à l'opposé du cinquième (12).
